# EUROPÄISCHE PATENTSCHRIFT

(11) **EP 1 521 700 B1**
(45) Veröffentlichungstag und Bekanntmachung des Hinweises auf die Patenterteilung: **25.10.2006**
(21) Anmeldenummer: 03740416.7
(22) Anmeldetag: 04.07.2003
(51) Int. Cl.: B62D 5/04, B62D 5/06, B62D 5/30, B62D 15/02

(54) **HYDRAULISCHE SERVOLENKUNG**
HYDRAULIC POWER-ASSISTED STEERING SYSTEM
DIRECTION ASSISTEE HYDRAULIQUE

(30) Priorität: 05.07.2002 DE 10230264
(43) Veröffentlichungstag der Anmeldung: 13.04.2005
(73) Patentinhaber: Continental Teves AG & Co. oHG, 60488 Frankfurt am Main (DE); Linkenbach, Steffen, 65760 Eschborn (DE)
(72) Erfinder: BÖHM, Jürgen, 65558 Oberneisen (DE)
(86) Internationale Anmeldenummer: PCT/EP2003/007170
(87) Internationale Veröffentlichungsnummer: WO 2004/005112

(56) Entgegenhaltungen:
- EP-A- 1 142 746
- WO-A-01/70555
- DE-A- 19 911 892
- US-A- 4 574 905

## Beschreibung

Die Erfindung betrifft eine hydraulische Servolenkung mit einem Lenkgetriebe und mit einem hydraulischen Aktuator zur Unterstützung einer Lenkradbetätigung durch den Fahrer eines Fahrzeugs, insbesondere eines Kraftfahrzeugs, mit einem an die Lenksäule angekoppelten Elektromotor als Zusatzmoment-Aktuator zur aktiven Aufbringung eines Zusatz-Lenkmoments, und mit einer elektronischen Steuerungs- und Regelungseinheit (ECU).

Die Erfindung betrifft ebenso ein Verfahren zur Regelung einer hydraulischen Servolenkung, bei dem die Lenkradbetätigung durch den Fahrer eines Fahrzeugs, insbesondere eines Kraftfahrzeugs, mit einer hydraulischen Kraft bzw. Druck unterstützt wird und bei dem durch einen an die Lenksäule angekoppelten Elektromotor als Zusatzmoment-Aktuator ein Zusatz-Lenkmoments aktiv aufgebracht wird durch eine elektronische Steuerung bzw. Regelung des Elektromotors.

Heutige Kraftfahrzeuge, insbesondere Personenkraftwagen, sind in der Regel mit hydraulischen oder elektrohydraulischen Servolenkungen ausgestattet, im folgenden als "hydraulische Servolenkungen" bezeichnet. Die Servounterstützung ist derart aufgebaut, dass im Mittelbereich des Lenkmechanismus Aktuatoren, z.B. Hydraulikzylinder, angeordnet sind. Durch eine von den Aktuatoren erzeugte Kraft wird die Betätigung des Lenkmechanismus in Reaktion auf die Drehung des Lenkrads unterstützt (Momentenunterstützung). Das zum Lenken des Fahrzeugs aufzubringende Moment wird so verringert und der Fahrer bei der Lenktätigkeit entlastet.

Es ist bekannt, die Momentenunterstützung oder die Verstärkung der Lenkung geschwindigkeitsabhängig auszulegen. Bei niedrigen Fahrzeuggeschwindigkeiten, wie sie für das Einparken oder Ausparken typisch sind, wird eine sehr leichtgängige Lenkung mit einer großen Momentenunterstützung bevorzugt, während bei schneller Fahrt eine schwergängigere Lenkung mit geringer Momentenunterstützung wünschenswert ist.

Ein entsprechender Stand der Technik ist in der WO-A-0 170 555 beschrieben.

Aufgabe der Erfindung ist es, eine hydraulische Servolenkung anzugeben, die es ermöglicht, eine variable Momentenunterstützung vorzusehen und dabei einfach in bereits vorhandene hydraulische Servolenkungen integrierbar ist.

Diese Aufgabe wird mit den Merkmalen der unabhängigen Ansprüche gelöst. Abhängige Ansprüche sind auf bevorzugte Ausführungsformen der Erfindung gerichtet.

Unter dem Begriff "Lenkrad" sind hier alle denkbaren Betätigungseinrichtungen zum Lenken eines Fahrzeugs, wie Lenkhandrad, Steuerknüppel oder "Joystick", zu verstehen.

Wesentlich für die Erfindung ist es, dass die elektronische Steuerungs- und Regelungseinheit (ECU) eine Ermittlungseinheit zur Ermittlung eines Lenkmoments und eine Auswerte- und Auswahlschaltung aufweist, mittels der unter Berücksichtigung des ermittelten Lenkmoments oder einer davon abgeleiteten Größe sowie einer gewählten Lenkungs-Grundkennlinie (Grundkennlinie) ein Gesamtwert für das Aufbringen des Zusatz-Lenkmoments ermittelt wird, wobei der Gesamtwert für das aufzubringende Zusatz-Lenkmoments einen fahrerabhängigen Anteil und einen fahrerunabhängigen Anteil aufweist.

Das Zusatz-Lenkmoments weist demnach einen im Grundsatz fahrerabhängigen Anteil auf, der einer Grundlenkfunktion, insbesondere einer fahrgeschwindigkeitsabhängigen Lenkungsunterstützung, z.B. Parameterlenkung, entspricht. Als weiterer Anteil ist ein im Grundsatz fahrerunabhängiger Anteil vorgesehen, mit dem Fahrerassistenzfunktionen realisiert werden. Damit sind z.B. Systeme zur Spurhaltung des Fahrzeugs (Lane-keeping) oder zur Unterstützung in hochdynamischen Fahrbahnsituationen, z.B. nach Maßgabe eines Fahrdynamiksystems (ESP-Systems), gemeint.

Erfindungsgemäß ist es vorgesehen, dass zur Variation der Aufbringung des Zusatz-Lenkmoments verschiedene vorgegebene Kennlinien wählbar sind.

Es ist erfindungsgemäß vorgesehen, dass die Kennlinie eine Verstärkungskennlinie darstellt, die das aufzubringende Zusatz-Lenkmoment in Abhängigkeit des vom Fahrer aufgebrachten Lenkmoments sowie eines Verstärkungsfaktors übermittelt.

Erfindungsgemäß ist es vorgesehen, dass durch eine vom Fahrer direkt oder indirekt vorgebbare Steuervariable ST verschiedene vorgegebene Kennlinien zur Variation der Aufbringung des Zusatz-Lenkmoments wählbar sind.

Nach der Erfindung ist es vorgesehen, dass die elektronische Steuerungs- und Regelungseinheit (ECU) redundant ausgeführt ist.

Es ist erfindungsgemäß vorgesehen, dass der Elektromotor über ein Getriebe, vorzugsweise ein Riemengetriebe an die Lenksäule angekoppelt ist.

Nach der Erfindung es vorgesehen, dass die Verstärkungsfaktoren der verschiedenen Kennlinien in Abhängigkeit von der Fahrzeuggeschwindigkeit veränderbar sind.

Erfindungsgemäß ist es vorgesehen, dass mittels des fahrerunabhängigen Anteils eine Lenkempfehlung für den Fahrer erfolgt.

Nach der Erfindung ist es vorgesehen, dass mittels des fahrerunabhängigen Anteils eine Stabilisierung des Fahrzeugs bzw. Erhöhung der Fahrzeugdynamik erfolgt.

Diese Ausführungsform ist besonders bevorzugt, da der Komfort und die Sicherheit in hochdynamischen oder sicherheitskritischen Fahrsituationen durch eine erfindungsgemäße Berücksichtigung fahrdynamischer Größen deutlich erhöht werden kann.

Es ist erfindungsgemäß vorgesehen, dass mittels des fahrerunabhängigen Anteils eine Anpassung des Zusatz-Lenkradmoment an einen Fahrzeugkurs und einen Fahrbahnverlauf erfolgt.

Nach der Erfindung ist es vorgesehen, dass die Variationen des Zusatz-Lenkmoments durch einen Skalierungsfaktor λ oder Verstärkungsfaktor V (mit V = 1/λ) erfolgt.

Vorzugsweise wird der Skalierungsfaktor λ oder Verstärkungsfaktor V (mit V = 1/λ) momentenabhängig auf einen vorgegebenen Wert begrenzt. Das bedeutet, es wird, insbesondere nach Maßgabe des Verhältnisses von einem vom Fahrer maximal aufbringbaren Lenkmoment und einem aktuell vom Fahrer aufzubringenden Lenkmoment eine Begrenzung eingeführt, damit die Verstärkung der Lenkungstätigkeit insgesamt nicht einen betimmten Wert unterschreitet.

Es ist erfindungsgemäß vorgesehen, dass die Mittel zur aktiven Aufbringung des Zusatz-Lenkmoments als eine Einheit ausgebildet sind, die als ein Modul an einen lenkradseitigen Endabschnitt des Lenkventils einer hydraulischen Servolenkung angeordnet ist.

Die Aufgabe wird auch durch ein Verfahren gelöst, das dadurch gekennzeichnet ist, dass aus einem fahrerabhängigen Anteil und einem fahrerunabhängigen Anteil unter Berücksichtigung des Zusatz-Lenkmoments oder einer davon abgeleiteten Größe sowie einer vorgewählten Lenkungs-Grundkennlinie (Grundkennlinie) ein Gesamtwert für das Zusatz-Lenkmoment ermittelt wird.

Vorzugsweise wird bei dem Verfahren eine Variation der Aufbringung des Zusatz-Lenkmoments durch eine Auswahl einer Kennlinie aus mehreren verschiedenen, vorgegebenen Kennlinien vorgenommen.

Die Erfindung wird in der nachfolgenden Beschreibung unter Bezugnahme auf die Abbildungen (Fig.1 bis Fig.9) beispielhaft näher erläutert.

Fig.1 zeigt schematisch eine Ausführungsform der erfindungsgemäßen Servolenkung mit einem elektromechanischen Aktuator.

In der Fig.2 ist eine Grundkennlinie einer Servolenkung und eine modifizierte Kennlinie dargestellt.

In der Fig.3 ist eine Grundkennlinie einer Servolenkung und eine modifizierte Kennlinie mit einer Centerpunkt-Verschiebung dargestellt.

In der Fig.4a ist eine Grundkennlinie einer Servolenkung und zwei nach Maßgabe der Fahrzeuggeschwindigkeit durch einen Verstärkungsfaktor V modifizierte Kennlinien dargestellt.

In der Fig.4b ist eine Abhängigkeit des Verstärkungsfaktors V nach Maßgabe der Fahrzeuggeschwindigkeit dargestellt.

In der Fig.5 ist eine Ausführungsform für eine erfindungsgemäße Ermittlung eines Überlagerungs-Moments für die Ansteuerung des Elektromotors der Servolenkung dargestellt.

In der Fig.6 ist eine weitere Ausführungsform für eine erfindungsgemäße Ermittlung eines Überlagerungs-Moments für die Ansteuerung des Elektromotors der Servolenkung dargestellt.

Fig.7 zeigt schematisch eine zweite Ausführungsform der erfindungsgemäßen Servolenkung mit einem elektromechanischen Aktuator und Ermittlung des Moments am Drehstab auf Grundlage von Signalen von Drucksensoren in den Arbeitskammern der Servolenkung.

In der Fig.8 ist die Ermittlung des Moments am Drehstab auf Grundlage von einem ermittelten hydraulischen Druck in den Arbeitskammern der Servolenkung dargestellt.

Fig.9 zeigt schematisch eine dritte Ausführungsform der erfindungsgemäßen Servolenkung mit einem elektromechanischen Aktuator und Ermittlung des Moments am Drehstab auf Grundlage von Signalen von Drehwinkelsensoren am Motor und an der Lenkradwelle der Servolenkung.

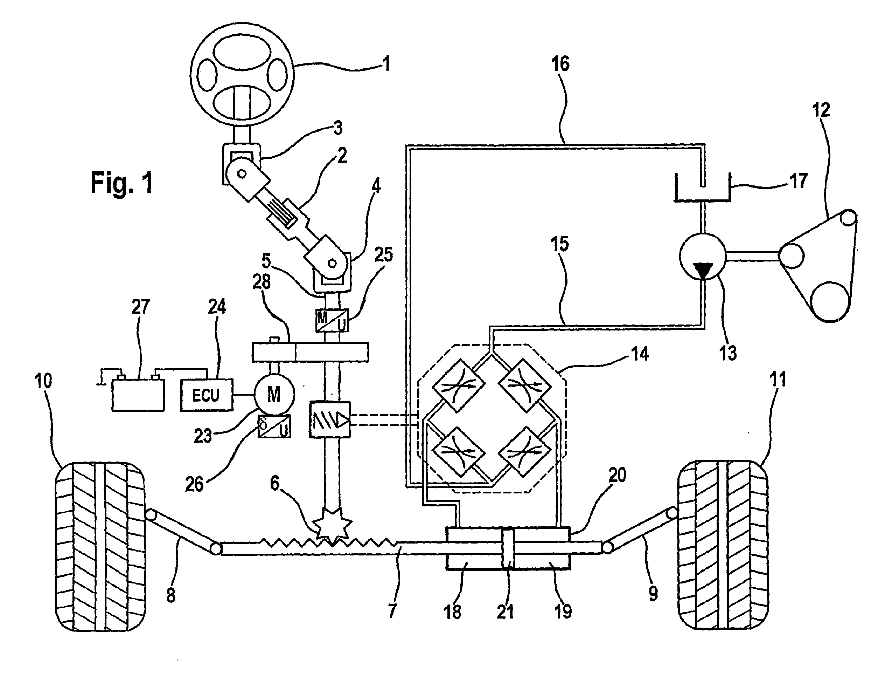

Das in der Fig.1 dargestellte Lenksystem besteht aus einem Lenkrad 1, einer mit dem Lenkrad 1 verbundenen Lenksäule 2 mit 2 Kreuzgelenken 3,4. Die Lenksäule 2 ist verbunden oder ein Teil einer Lenkradwelle 5, im folgenden auch als "Torsionsstab" bezeichnet, die über ein Lenkgetriebe 6, eine Lenkstange 7, hier als Zahnstange 7 ausgebildet, die seitlich an der Zahnstange 7 befestigten Spurstangen 8,9 betätigt, und dadurch ein Verschwenken der Räder 10,11 bewirkt. Bei der hier gezeigten Zahnstangenlenkung wird eine hydraulische Unterstützung mittels einer von dem Antriebsmotor des Fahrzeugs, z.B. über einen Riementrieb 12, angetriebene hydraulische Pumpe 13 realisiert, die unter Druck stehende Druckflüssigkeit zu einem Lenkventil 14 über eine Leitung 15 liefert. Durch eine Rücklaufleitung 16 kann die Druckflüssigkeit zurück in einen Vorratsbehälter 17 strömen. In Geradeausstellung des Lenkrads fließt ein konstanter Ölstrom durch das in Neutralstellung stehende Lenkventil (offenen Mitte) und durch die Rücklaufleitung 16 zurück. Der Druck in 2 Kammern 18,19 eines an der Zahnstange 7 angeordneten Arbeitszylinders 20 ist dann gleich groß. Es erfolgt keine Lenkunterstützung. Beim Drehen des Lenkrads 1 wird die Zahnstange 7 und somit auch der Kolben 21 verschoben. Die Bewegung des Kolbens 21 wird durch den Druck der Druckflüssigkeit unterstützt. Dabei bewirkt das Ventil 14 zugleich, dass Druckflüssigkeit von einer Kammer in die andere Kammer fließt, so dass insgesamt die Lenkbetätigung eine hydraulische Unterstützung erfährt.

Diese oben beschriebene konventionelle hydraulische Servolenkung weist zur Erzeugung eines Zusatz-Moments einen Elektromotor 23, eine redundante Steuerungseinheit ECU 24 zur Ansteuerung des Motors 23 und zur Auswertung von Signalen eines redundanten Lenkmomentensensors 25 auf. Vorzugsweise ist auch ein Sensors für die Motorlage 26 vorgesehen. Die elektronischen Bauteile sind an einer elektrischen Energiequelle 27 angeschlossen. Die Steuerungseinheit ECU 24 und Momentensensor sind vorzugsweise redundant ausgeführt.

Das Lenkradmoment oder Lenkmoment, welches durch die Lenksystemcharakteristik sowie die wirkenden Kräfte definiert ist, kann durch den E-Motor 23 aktiv beeinflusst werden, in dem dieser ein Zusatzmoment (Zusatz-Lenkmoment) erzeugt und auf die Lenkstange aufbringt. Es besteht die Möglichkeit das Moment dem konstruktiv vorgegebenen Lenkradmoment aufzuaddieren oder es von ihm abzuziehen. Die Übertragung des Motormoments kann mit oder ohne Übersetzung direkt oder, wie hier dargestellt, über ein Getriebe 28 erfolgen. Dabei kann ein Riemengetriebe, ein Schrauben-/Schneckengetriebe oder ein Stirnradgetriebe verwendet werden.

Bei Ausfall des E-Motor 23 und/oder der Steuerungseinheit ECU 24 bleibt die dem Fahrer bekannte Lenkungscharakteristik mit Servounterstützung erhalten. Der E-Motor 23 und die Steuerungseinheit ECU 24 ist dazu failsilent ausgelegt. Das bedeutet, im Fehlerfall werden diese Bauteile abgeschaltet.

Mittels des Systems zur Erzeugung eines Zusatz-Moments kann vorteilhaft eine konventionelle Servolenkung ohne Modifikationen an der Charakteristik verwendet werden.

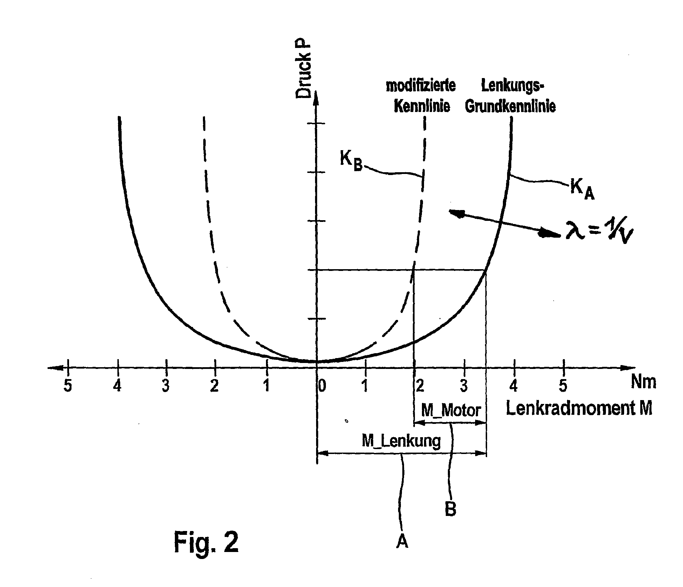

Mit der Erfindung ist es möglich, die Verstärkungskennlinie durch Erzeugung eines Zusatz-Moments zu variieren (siehe Fig.2). Die Verstärkungskennlinie bedeutet hier die Abhängigkeit des Lenkradmoments oder Betätigungsmoments M vom vorhandenen Systemdruck P der hydraulischen Unterstützung. Die Variationen des Zusatz-Lenkmoments erfolgt dabei vorzugsweise durch einen Verstärkungsfaktor V bzw. Skalierungsfaktor λ, wobei gilt V = 1 / λ . In dem gezeigten Beispiel wird das Moment A (M_Lenkung) durch eine aktive Aufbringung eines Zusatzmoments B (M_Motor) verringert. Dass bedeutet der Fahrer wird in seiner Lenktätigkeit stärker unterstützt. Es resultiert eine modifizierte Kennlinie (gestrichelte Kurve K_{B}) mit einer geringeren Betätigungskraft gegenüber der ursprünglichen Kennlinie (durchgezogene Kurve K_{A}). Durch diese Variation der Kennlinie kann eine aktive Fahrerassistenz realisiert werden. Durch die Momentenvariation wird eine Lenkempfehlung gegeben.

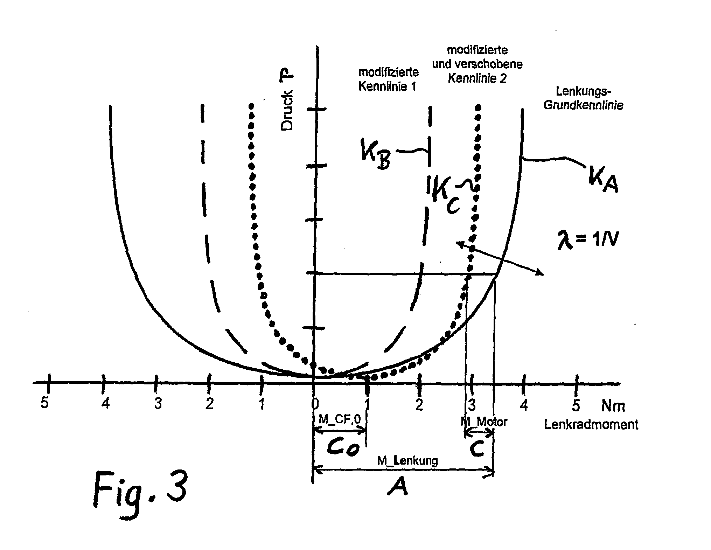

Eine aktive Fahrerassistenz wird darüber hinaus besonders vorteilhaft durch eine Verschiebung des Mittelpunkts einer Kennlinie (Centerpunkt-Verschiebung), beispielsweise der Kennlinie K_{A} oder K_{B} realisiert. In Fig.3 ist dargestellt, wie eine Centerpunkt-Verschiebung zusätzlich zu einer in der Fig.2 gezeigten Momentenveränderung durchgeführt wird. Analog zur Fig.2 wird das Moment A (M_Lenkung) durch aktive Aufbringung des Zusatzmoments C (M_Motor) verringert. Die resultierende Kennlinie K_{C} (gepunktete Kurve in Fig.3) mit einer geringeren Betätigungskraft gegenüber der ursprünglichen Kennlinie (durchgezogene Kurve K_{A}) entspricht hier der in Fig.2 gezeigten modifizierten Kennlinie K_{B} (gestrichelte Kurve in Fig.3 und Fig.2) mit einer zusätzlichen Verschiebung des Mittelpunkts M_CF,0. Dadurch erfährt der Fahrer eine stärkere Unterstützung seiner Lenktätigkeit in einer bestimmten Richtung als ein Hinweis darauf, in welche Richtung er lenken soll. Mit diesem System kann die Lenkempfehlung an den Fahrer, in welche Richtung er lenken soll, besonders vorteilhaft gegeben werden.

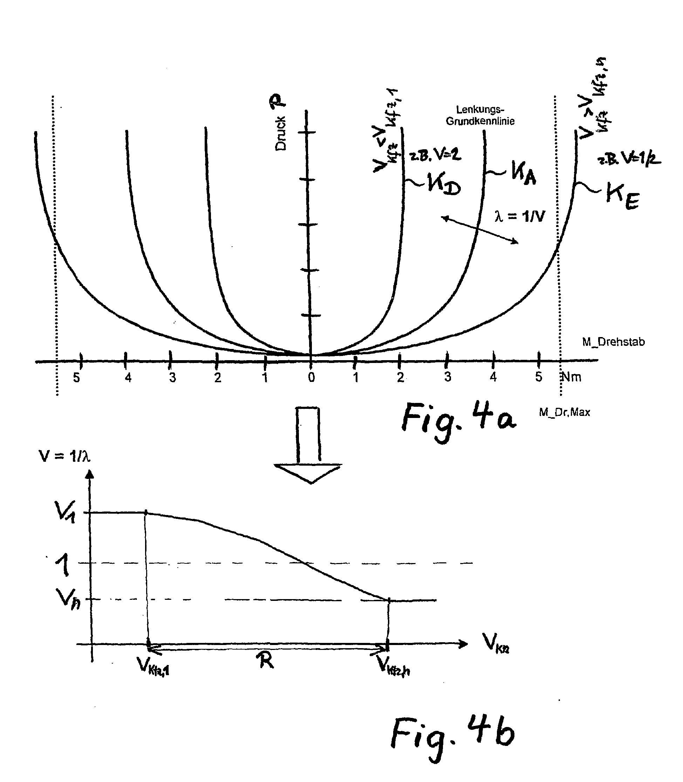

In der Fig.4a ist dargestellt, wie eine Grundkennlinie K_{A} nach Maßgabe der Fahrzeuggeschwindigkeit V_{Kfz} variiert wird. In dem gezeigten Beispiel wird bei einer geringeren Fahrzeuggeschwindigkeit V_{Kfz}, wenn die Fahrzeuggeschwindigkeit unterhalb eines ersten Grenzwerts V_{Kfz,1} liegt, d.h. wenn V_{Kfz} < V_{Kfz,1} gilt, die Grundkennlinie K_{A} durch einen Verstärkungsfaktor V (1/λ) größer 1, hier z.B. einen Faktor 2 modifiziert. Es resultiert eine modifizierte, geschwindigkeitskorrigierte Kennlinie (Kennlinie K_{D} in Fig.4a). Andererseits wird bei einer größeren Fahrzeuggeschwindigkeit V_{Kfz}, wenn die Fahrzeuggeschwindigkeit oberhalb eines zweiten Grenzwerts V_{Kfz,n} liegt, d.h. wenn d.h. wenn V_{Kfz} > V_{Kfz,n} gilt, die Grundkennlinie K_{A} durch einen Verstärkungsfaktor V (1/λ) kleiner 1, hier z.B. einen Faktor 1/2 modifiziert. Es resultiert eine modifizierte, geschwindigkeitskorrigierte Kennlinie (Kennlinie K_{E} in Fig.4a).

Die Variation des Verstärkungsfaktor V (1/λ) nach Maßgabe der Geschwindigkeit zeigt Fig.4b. Bis zu dem ersten Grenzwert der Fahrzeuggeschwindigkeit V_{Kfz,1} bleibt der Verstärkungsfaktor V bei einem ersten, höheren Wert V₁, hier z.B. einen Faktor von 2. Er nimmt dann kontinuierlich mit steigender Fahrzeuggeschwindigkeit V_{KFz} ab (Regelungsbereich R) und erreicht ab dem zweiten Grenzwert der Fahrzeuggeschwindigkeit V_{Kfz,n}, d.h. wenn d.h. wenn V_{Kfz} > V_{Kfz,n} gilt, einen zweiten, niedrigeren Wert Vₙ, hier z.B. einen Faktor von 1/2.

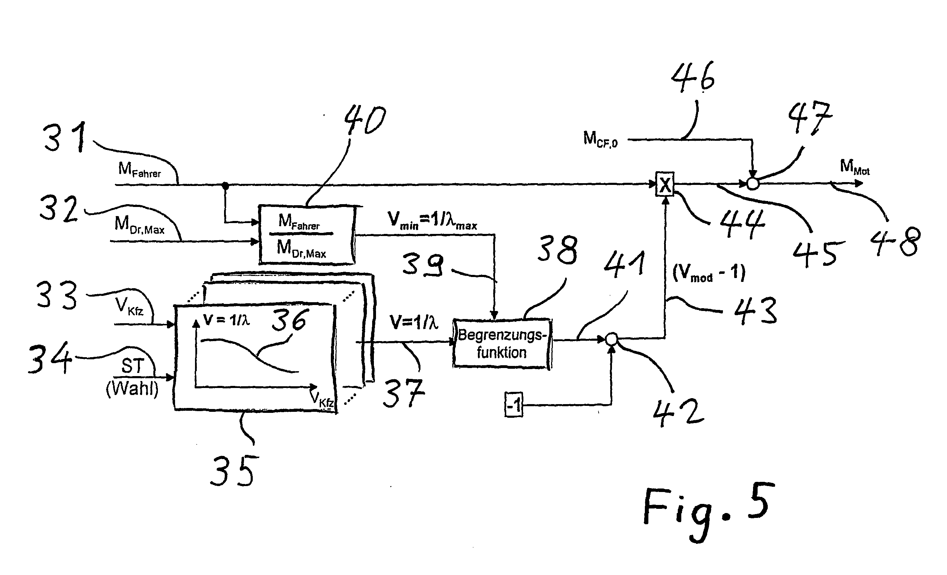

Bei der in der Fig.5 dargestellten Ausführungsform der erfindungsgemäßen Ansteuerung des Elektromotors der Servolenkung wird das Lenkradmoment des Fahrers mittels eines Momentensensors erfasst.

Eine Variation der Lenkunterstützung kann z.B. in Abhängigkeit der Fahrzeuggeschwindigkeit (ähnlich einer Parameterlenkung) erfolgen, wie es in Fig.4a und 4b dargestellt wird. Erfindungsgemäß erfolgt die Variation vorzugsweise durch den Verstärkungsfaktor V. Andere Berechnungsvorschriften sind allerdings auch möglich.

Eingangsgrößen für die Ermittlung sind ein vom Fahrer aufzubringendes Moment M_{Fahrer} 31, ein vom Fahrer maximal aufbringbares Moment M_{Dr,max} 32, die Fahrzeuggeschwindigkeit V_{Kfz} 33, und eine vom Fahrer direkt oder indirekt vorgebbare Steuervariablen ST 34. Mit Hilfe der Steuervariablen ST 34 kann vorteilhaft zwischen verschiedenen Kennlinien und Variationsmöglichkeiten gewählt werden.

Nach Maßgabe der Fahrzeuggeschwindigkeit V_{Kfz} 33 und der Steuervariablen ST 34 wird in einer Ermittlungseinheit 35, vorzugsweise nach einer vorgegebenen oder vorgebbaren Funktion 36 ein Verstärkungsfaktor V 37 bestimmt.

Beim Verstärkungsfaktor V, entsprechend 1/λ, wird durch eine Begrenzerfunktion 38, ein minimaler Wert für den Verstärkungsfaktor V 39 mitberücksichtigt, der sich aus dem Verhältnis des vom Fahrer aufzubringenden Moments M_{Fahrer} 31 und dem vom Fahrer maximal aufbringbaren Moment M_{Dr,max} 32 ergibt 40. Durch diese momentenabhängige Begrenzung des Verstärkungsfaktors V wird verhindert, dass bei einer Reduktion der Lenkunterstützung, bei einem Verstärkungsfaktor V kleiner "Eins" (V < 1) das vom Fahrer aufzubringende Moment M_{Dr,max} 32 nicht zu stark und ggf. unkontrolliert ansteigt.

Zur Normierung wird von dem so ermittelten Verstärkungsfaktor V 41 der Wert "Eins" abgezogen (V - 1) 42 und der modifizierte, um "Eins" verminderte Verstärkungsfaktor (V_{mod} - 1) 43 wird dem vom Fahrer aufzubringenden Moment M_{Fahrer} 31 überlagert 44. Zu diesem überlagerten Moment 45 wird ggf. zusätzlich ein veränderliches Moment M_{CF,0} 46, insbesondere zwecks Centerpunkt-Verschiebung, berücksichtigt 47. Durch das veränderliche Moment M_{CF,0} werden vorteilhaft vom Fahrer unabhängige Momenteneingriffe berücksichtigt, wodurch eine Verschiebung der Grundlenkungskennlinie erfolgt. Auf diese Weise ist eine aktive Fahrerassistenz auf Momentenbasis zu realisieren. Diese Fahrerassistenz wirkt im Sinne einer Lenkempfehlung für den Fahrer durch ein hier nicht dargestelltes übergeordnetes Regelsystem. Umgekehrt kann durch eine Momentenerhöhung das Lenken in eine Richtung erschwert werden. Im Falle einer Lenkempfehlung für den Fahrer wird das Zusatzmoment M_{CF,0} 46 so lange in Richtung des Zielkurses um ein bestimmtes Deltamoment erhöht, bis der vom übergeordneten Regelsystem berechnete Lenkwinkel (entspricht dem Zielkurs des Fahrzeugs) vom Fahrer eingestellt ist (Centerpunkt-Verschiebung). Ignoriert der Fahrer die Lenkempfehlung, indem er den gewünschen Vorgaben nicht folgt, so werden die aufgrund der Lenkempfehlung berechneten Zusatzmomente M_{CF,0} 46 wieder langsam, d.h. schrittweise auf den Wert "Null" (M_{CF,0} = 0) reduziert. Auch eine Warnung vor kritischen Fahrsituationen ist durch eine geeignete Vorgabe des Zusatzmoments möglich.

Als Ausgangsgröße wird ein resultierendes Motormoment M_{Mot} 48 gebildet.

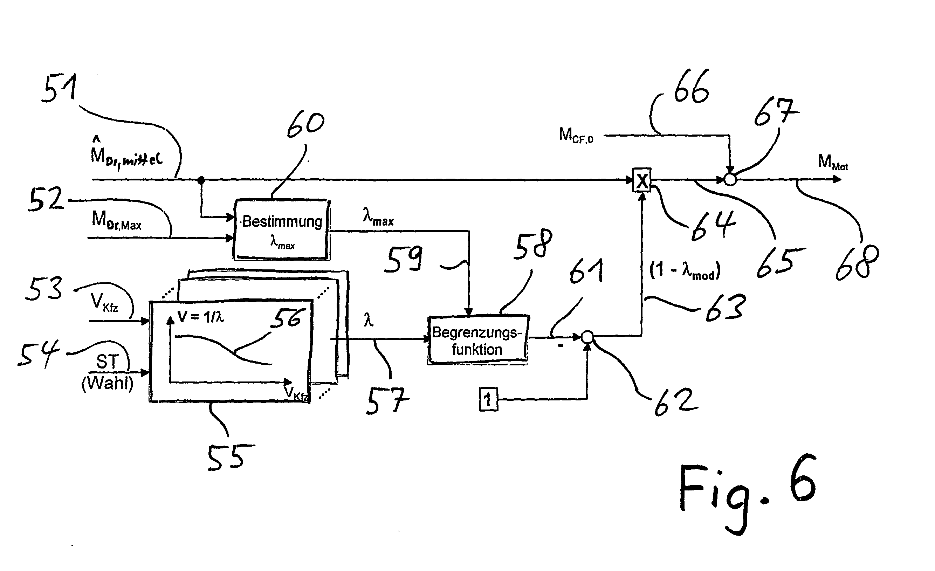

In der Fig.6 ist eine andere Ausführungsform der Erfindung gezeigt, in der auf den Einsatz eines Momentensensors zur Erfassung des Handmoments des Fahrers M_{Fahrer} verzichtet wird. Das für die Momentenüberlagerungs-Funktion erforderliche Moment des Torsionsstabs der Lenkung wird rekonstruiert. Es wird ein ermitteltes oder geschätztes Handmoment des Fahrers M_{Dr,mittel} 51 an Stelle des vom Fahrer aufzubringendes Moment M_{Fahrer} 31 in Fig.5 als Eingangsgröße eingesetzt, neben dem vom Fahrer maximal aufbringbaren Moment M_{Dr,max} 52, der Fahrzeuggeschwindigkeit V_{Kfz} 53, der vom Fahrer direkt oder indirekt vorgebbaren Steuervariablen ST 54.

In der Ermittlungseinheit 55 wird auf Grundlage der Fahrzeuggeschwindigkeit V_{Kfz} 53 und der Steuervariablen ST 54 wird nach einer vorzugsweise vorgegebenen oder vorgebbaren Funktion 56 eine Skalierungsfaktor λ 57, entsprechend einem Verstärkungsfaktor V (V = 1 / λ), bestimmt.

Aus dem ermittelten oder geschätzten Handmoment des Fahrers M_{Dr,mittel} 51 und dem vom Fahrer maximal aufbringbaren Moment M_{Dr,max} 52 wird ein maximaler Skalierungsfaktor λₘₐₓ bestimmt 60. Dieser Wert dient als Eingangsgröße 59 für die Begrenzerfunktion 58. Durch die Begrenzung des Skalierungsfaktor λ durch diese Funktion 58 wird verhindert, dass bei einer Reduktion der Lenkunterstützung bei einem Skalierungsfaktor λ größer "Eins" (λ >1) und damit einem Verstärkungsfaktor V kleiner "Null" (V < 0) das vom Fahrer aufzubringende Moment M_{Dr,max} 52 zu stark und ggf. unkontrolliert ansteigt.

Zur Normierung wird so ermittelte Skalierungsfaktor λ 61 vom Wert "Eins" abgezogen (1 - λ_{mod}) 62 und der so normierte Wert (1 - λ_{mod}) 63 wird dem ermittelten oder geschätzten Wert M_{Dr,mittel} 51 für das vom Fahrer aufzubringende Moment überlagert 64.

Zu diesem überlagerten Moment 65 wird ggf. zusätzlich das veränderliche, vom Fahrer unabhängige Moment M_{CF,0} 66, insbesondere zwecks Centerpunkt-Verschiebung, überlagert 67. Das Ergebnis ergibt den Ausgangswert für das Überlagerungmoment M_{Mot} 68.

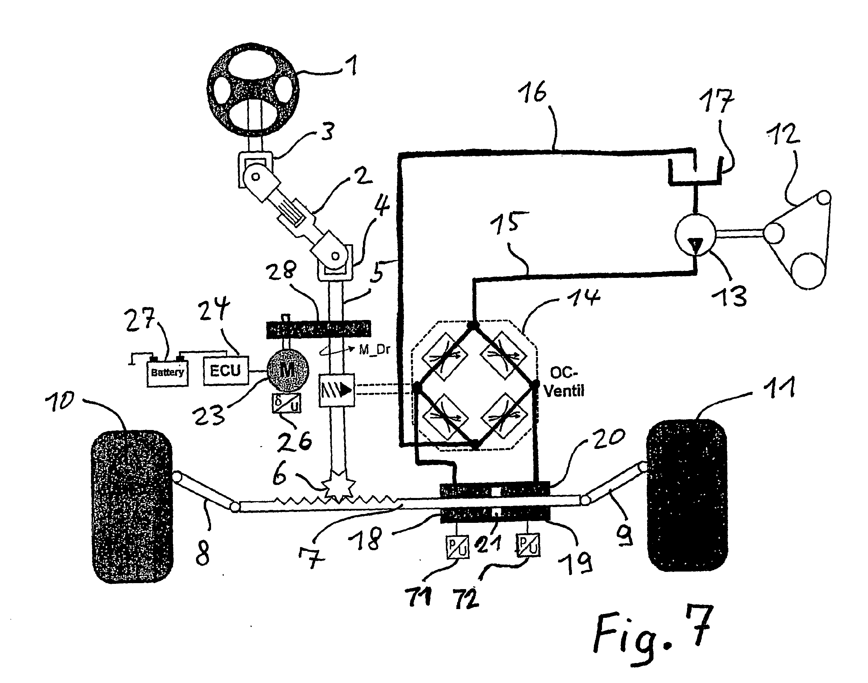

In der Fig.7 ist eine zweite Ausführungsform der erfindungsgemäßen Servolenkung mit einem elektromechanischen Aktuator dargestellt, bei der ein Moment am Torsionsstab 5 bestimmt wird auf Grundlage von Signalen von Drucksensoren 71,72 in den hydraulischen Arbeitskammern 18,19 der Servolenkung. Das Grund-Lenksystem mit hydraulischer Unterstützung ist identisch zu dem in Fig.1 gezeigten System und wird daher nicht mehr im einzelnen erläutert.

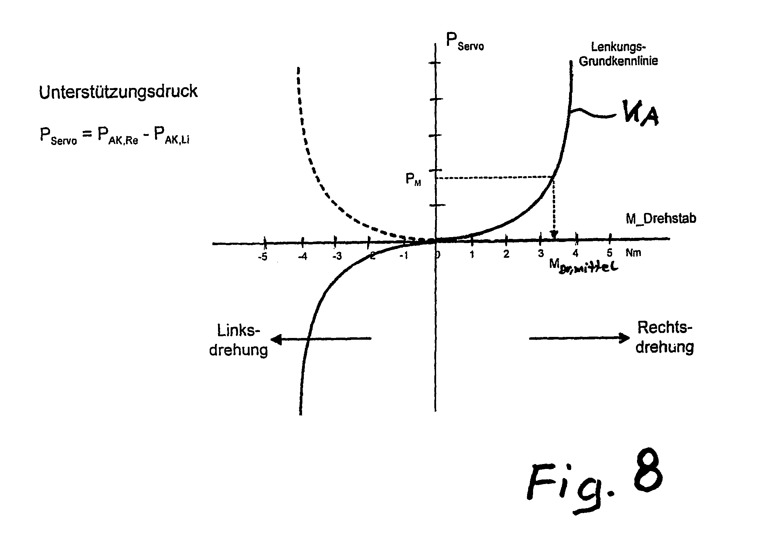

In der Fig.8 ist die Ermittlung des Moments am Drehstab auf Grundlage von einem ermittelten hydraulischen Druck in den Arbeitskammern der Servolenkung dargestellt. Der (hydraulische) Unterstützungsdruck P_{Servo} ergibt sich aus der Differenz des hydraulischen Drucks in der rechten Arbeitskammer P_{AK,Re} und in der linken Arbeitskammer P_{AK,Li} (Pservo = P_{AK,Re} - P_{AK,Li}). Die entsprechende Kennlinie der Grundlenkfunktion ist als durchgezogene Linie K_{A} in Fig.8 eingetragen. Aus einem bestimmten, auf Grundlage der Drucksensoren 71,72 ermittelten Wert für den Unterstützungsdruck P_{Servo}, hier z.B. P_{M} in Fig.8, kann über die Kennlinie K_{A} ein zugehöriges Drehmoment M_{Dr,mittel} am Drehstab ermittelt werden. Die gestrichelte Linie stellt die zuvor beschriebene (siehe Fig.2) Kennlinie dar mit einem positiven Unterstützungsdruck für eine Rechtsdrehung (rechte Hälfte) und Linksdrehung (linke Bildhälfte). Sie entspricht daher dem Betrag der gemessenen Druckdifferenz P_{AK,Re} - P_{AK,Li}.

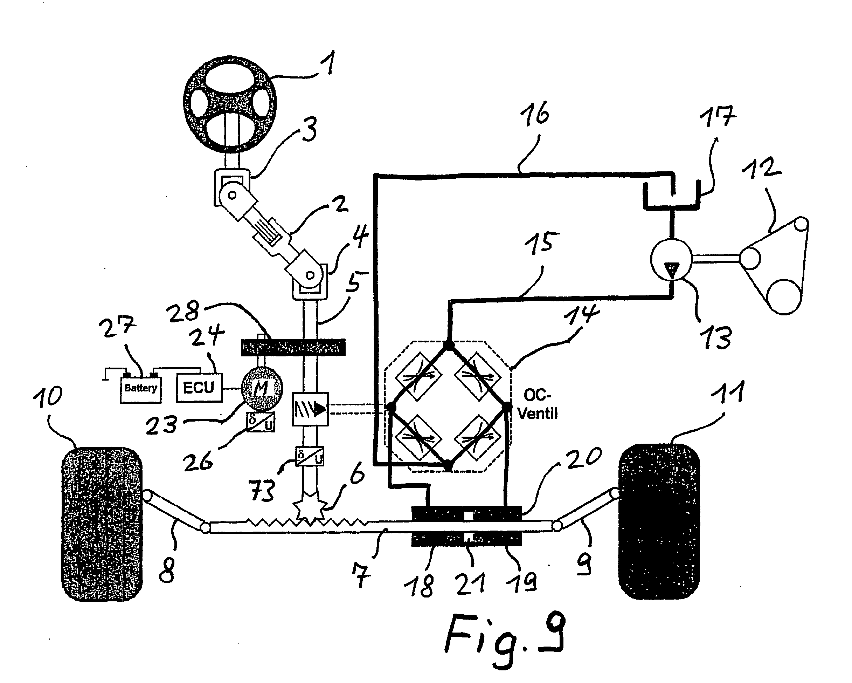

Fig.9 zeigt schematisch eine dritte Ausführungsform der erfindungsgemäßen Servolenkung mit einem elektromechanischen Aktuator und Ermittlung des Moments am Drehstab auf Grundlage von Signalen von dem Drehwinkelsensoren am Motor 26 (Motorwinkel ϕ_{Mot}) und einem weiteren Drehwinkelsensor 73 an der Lenkradwelle (Ritzelwinkel δ_{T}) der Servolenkung. Das Grund-Lenksystem mit hydraulischer Unterstützung ist identisch zu dem in Fig.1 gezeigten System und wird daher nicht mehr im einzelnen erläutert. Das Moment am Torsionsstab 5 wird durch eine Differenz-Winkelmessung auf Grundlage der Messsignale der Sensoren 26, 73.

Dazu wird aus dem Motorwinkel ϕ_{Mot} der Lenkradwinkel δ_{H} abgeleitet nach der Beziehung δ_{H} = ν * ϕ_{Mot}. Das Moment am Torsionsstab M_{Dr} bzw. M_{Drehstab} wird dann mittels der bekannten Steifigkeit des Torsionsstabs 5 C_{T} sowie der gemessenen Winkeldifferenz bestimmt nach der Beziehung M_{Dr,mittel} = C_{T} * (δ_{H} - δ_{T}).

## Patentansprüche

1. Hydraulische Servolenkung mit einem Lenkgetriebe und mit einem hydraulischen Aktuator zur Unterstützung einer Lenkradbetätigung durch den Fahrer eines Fahrzeugs, insbesondere eines Kraftfahrzeugs, mit einem an die Lenksäule angekoppelten Elektromotor als Zusatzmoment-Aktuator zur aktiven Aufbringung eines Zusatz-Lenkmoments, und mit einer elektronischen Steuerungs- und Regelungseinheit (ECU),
**dadurch gekennzeichnet, dass** die elektronische Steuerungs- und Regelungseinheit (ECU) eine Ermittlungseinheit zur Ermittlung eines Lenkmoments und eine Auswerte- und Auswahlschaltung aufweist, mittels der unter Berücksichtigung des ermittelten Lenkmoments oder einer davon abgeleiteten Größe sowie einer gewählten Lenkungs-Grundkennlinie (Grundkennlinie) ein Gesamtwert für das Aufbringen des Zusatz-Lenkmoments ermittelt wird, wobei der Gesamtwert für das aufzubringende Zusatz-Lenkmoments einen fahrerabhängigen Anteil und einen fahrerunabhängigen Anteil aufweist.

2. Servolenkung nach Anspruch 1,
**dadurch gekennzeichnet, dass** zur Variation der Aufbringung des Zusatz-Lenkmoments verschiedene vorgegebene Kennlinien wählbar sind.

3. Servolenkung nach Anspruch 1 oder 2,
**dadurch gekennzeichnet, dass** die Kennlinie eine Verstärkungskennlinie darstellt, die das aufzubringende Zusatz-Lenkmoment in Abhängigkeit des vom Fahrer aufgebrachten Lenkmoments sowie eines Verstärkungsfaktors übermittelt.

4. Servolenkung einem der Ansprüche 1 bis 3,
**dadurch gekennzeichnet, dass** durch eine vom Fahrer direkt oder indirekt vorgebbare Steuervariable ST verschiedene vorgegebene Kennlinien zur Variation der Aufbringung des Zusatz-Lenkmoments wählbar sind.

5. Servolenkung einem der Ansprüche 1 bis 4,
**dadurch gekennzeichnet, dass** die elektronische Steuerungs- und Regelungseinheit (ECU) redundant ausgeführt ist.

6. Servolenkung nach einem der Ansprüche 1 bis 5,
**dadurch gekennzeichnet, dass** der Elektromotor über ein Getriebe, vorzugsweise ein Riemengetriebe an die Lenksäule angekoppelt ist.

7. Servolenkung nach einem der Ansprüche 1 bis 6,
**dadurch gekennzeichnet, dass** die Verstärkungsfaktoren der verschiedenen Kennlinien in Abhängigkeit von der Fahrzeuggeschwindigkeit veränderbar sind.

8. Servolenkung nach einem der Ansprüche 1 bis 7,
**dadurch gekennzeichnet, dass** mittels des fahrerunabhängigen Anteils eine Lenkempfehlung für den Fahrer erfolgt.

9. Servolenkung nach einem der Ansprüche 1 bis 8,
**dadurch gekennzeichnet, dass** mittels des fahrerunabhängigen Anteils eine Stabilisierung des Fahrzeugs bzw. Erhöhung der Fahrzeugdynamik erfolgt.

10. Servolenkung nach einem der Ansprüche 1 bis 9,
**dadurch gekennzeichnet, dass** mittels des fahrerunabhängigen Anteils eine Anpassung des Zusatz-Lenkradmoment an einen Fahrzeugkurs und einen Fahrbahnverlauf erfolgt.

11. Servolenkung nach einem der Ansprüche 1 bis 10,
**dadurch gekennzeichnet, dass** die Variationen des Zusatz-Lenkmoments durch einen Verstärkungsfaktor V bzw. einen Skalierungsfaktor λ nach der Beziehung V = 1/λ erfolgt.

12. Servolenkung nach Anspruch 11,
**dadurch gekennzeichnet, dass** der Skalierungsfaktor λ oder Verstärkungsfaktor V (mit V = 1/λ) momentenabhängig auf einen vorgegebenen Wert begrenzt wird.

13. Servolenkung nach einem der Ansprüche 1 bis 12,
**dadurch gekennzeichnet, dass** die Mittel zur aktiven Aufbringung des Zusatz-Lenkmoments als eine Einheit ausgebildet sind, die als ein Modul an einen lenkradseitigen Endabschnitt des Lenkventils einer hydraulischen Servolenkung angeordnet ist.

14. Verfahren zur Regelung einer hydraulischen Servolenkung, bei dem die Lenkradbetätigung durch den Fahrer eines Fahrzeugs, insbesondere eines Kraftfahrzeugs, mit einer hydraulischen Kraft bzw. Druck unterstützt wird und bei dem durch einen an die Lenksäule angekoppelten Elektromotor als Zusatzmoment-Aktuator ein Zusatz-Lenkmoments aktiv aufgebracht wird durch eine elektronische Steuerung bzw. Regelung des Elektromotors,
**dadurch gekennzeichnet, dass** aus einem fahrerabhängigen Anteil und einem fahrerunabhängigen Anteil unter Berücksichtigung des Zusatz-Lenkmoments oder einer davon abgeleiteten Größe sowie einer vorgewählten Lenkungs-Grundkennlinie (Grundkennlinie) ein Gesamtwert für das Zusatz-Lenkmoment ermittelt wird.

15. Verfahren nach Anspruch 14,
**dadurch gekennzeichnet, dass** eine Variation der Aufbringung des Zusatz-Lenkmoments durch eine Auswahl einer Kennlinie aus mehreren verschiedenen, vorgegebenen Kennlinien erfolgt.

## Claims

1. Hydraulic power-assisted steering system comprising a steering gear and a hydraulic actuator for assisting actuation of the steering wheel by the driver of a vehicle, in particular a motor vehicle, comprising an electric motor which is coupled to the steering column and used as an additional torque actuator for actively applying an additional steering torque, also consisting of an electronic control and regulating unit (ECU),
**characterized in that** the electronic control and regulating unit (ECU) includes a determination unit for determining a steering torque and an evaluating and selecting circuit, by means of which a total value for applying the additional steering torque is determined in consideration of the determined steering torque or a quantity derived therefrom and a selected basic characteristic curve of steering (basic characteristic curve), and the total value of the additional steering torque to be applied includes a driver-dependent component and a driver-independent component.

2. Power-assisted steering system as claimed in claim 1,
**characterized in that** different predetermined characteristic curves can be selected for varying the application of the additional steering torque.

3. Power-assisted steering system as claimed in claim 1 or claim 2,
**characterized in that** the characteristic curve represents a characteristic curve of amplification conveying the additional steering torque to be applied in dependence on the steering torque applied by the driver and on an amplification factor.

4. Power-assisted steering system as claimed in any one of claims 1 to 3,
**characterized in that** different predetermined characteristic curves for the variation of the application of the additional steering torque can be selected by way of a control variable ST that is directly or indirectly predefinable by the driver.

5. Power-assisted steering system as claimed in any one of claims 1 to 4,
**characterized in that** the electronic control and regulating unit (ECU) is designed redundantly.

6. Power-assisted steering system as claimed in any one of claims 1 to 5,
**characterized in that** the electric motor is coupled to the steering column by way of a gear, preferably a belt drive.

7. Power-assisted steering system as claimed in any one of claims 1 to 6,
**characterized in that** the amplification factors of the different characteristic curves are variable in response to the vehicle speed.

8. Power-assisted steering system as claimed in any one of claims 1 to 7,
**characterized in that** a steering recommendation is given to the driver by means of the driver-independent component.

9. Power-assisted steering system as claimed in any one of claims 1 to 8,
**characterized in that** the vehicle is stabilized and the vehicle dynamics is enhanced, respectively, by means of the driver-independent component.

10. Power-assisted steering system as claimed in any one of claims 1 to 9,
**characterized in that** the additional steering torque is adapted to a vehicle course and a roadway course by means of the driver-independent component.

11. Power-assisted steering system as claimed in any one of claims 1 to 10,
**characterized in that** the variations of the additional steering torque are effected by using an amplification factor V or a scaling factor λ, respectively, according to the relation V = 1/λ.

12. Power-assisted steering system as claimed in claim 11,
**characterized in that** the scaling factor λ or amplification factor V (where V = 1/λ,) is limited to a predefined value in a torque-dependent fashion.

13. Power-assisted steering system as claimed in any one of claims 1 to 12,
**characterized in that** the means for the active application of the additional steering torque are designed as a unit that is arranged as a module at a steering-wheel-side end portion of the steering valve of a hydraulic power-assisted steering system.

14. Method of controlling a hydraulic power-assisted steering system wherein the actuation of the steering wheel by the driver of a vehicle, in particular a motor vehicle, is assisted by a hydraulic force or pressure and wherein an electric motor which is coupled to the steering column is used as an additional torque actuator for actively applying an additional steering torque by way of an electronic control or regulation of the electric motor,
**characterized in that** a total value of the additional steering torque is determined from a driver-dependent component and a driver-independent component in consideration of the additional steering torque or a quantity derived therefrom and a preselected basic characteristic curve of steering (characteristic curve).

15. Method as claimed in claim 14,
**characterized in that** a variation of the application of the additional steering torque is executed by way of selecting a characteristic curve from several different predetermined characteristic curves.

## Revendications

1. Direction assistée hydraulique avec un mécanisme de direction et un actionneur hydraulique pour assister l'actionnement d'un volant par le conducteur d'un véhicule, en particulier d'un véhicule automobile, avec un moteur électrique couplé à la colonne de direction en tant qu'actionneur de mouvement supplémentaire pour l'application active d'un moment de direction supplémentaire, et avec une unité électronique de commande et de régulation (ECU), **caractérisée en ce que** l'unité électronique de commande et de régulation (ECU) comporte une unité de détermination pour déterminer un moment de direction et un circuit d'exploitation et de sélection au moyen duquel, en tenant compte du moment de direction déterminé ou d'une grandeur dérivée de celui-ci, ainsi que d'une courbe caractéristique de base sélectionnée de la direction (courbe caractéristique de base), une valeur globale pour l'application du moment de direction supplémentaire est déterminée, la valeur globale du moment de direction supplémentaire à appliquer comportant une fraction dépendant du conducteur et une fraction indépendante du conducteur.

2. Direction assistée selon la revendication 1, **caractérisée en ce que** pour modifier l'application du moment de direction supplémentaire, différentes courbes caractéristiques prédéfinies peuvent être sélectionnées.

3. Direction assistée selon la revendication 1 ou 2, **caractérisée en ce que** la courbe caractéristique représente une courbe caractéristique d'amplification qui transmet le moment de direction supplémentaire à appliquer en fonction du moment de direction appliqué par le conducteur, ainsi que d'un facteur d'amplification.

4. Direction assistée selon l'une des revendications 1 à 3, **caractérisée en ce que** par une variable de commande (ST), à prédéfinir directement ou indirectement par le conducteur, différentes courbes caractéristiques prédéfinies peuvent être sélectionnées pour modifier l'application du moment de direction supplémentaire.

5. Direction assistée selon l'une des revendications 1 à 4, **caractérisée en ce que** l'unité électronique de commande et de régulation (ECU) est réalisée redondante.

6. Direction assistée selon l'une des revendications 1 à 5, **caractérisée en ce que** le moteur électrique est accouplé à la colonne de direction, par une transmission, de préférence une transmission à courroie.

7. Direction assistée selon l'une des revendications 1 à 6, **caractérisée en ce que** les facteurs d'amplification des différentes courbes caractéristiques peuvent être modifiées en fonction de la vitesse du véhicule.

8. Direction assistée selon l'une des revendications 1 à 7, **caractérisée en ce qu'**une recommandation de direction pour le conducteur s'effectue au moyen de la fraction indépendante du conducteur.

9. Direction assistée selon l'une des revendications 1 à 8, **caractérisée en ce qu'**au moyen de la fraction indépendante du conducteur il se produit une stabilisation du véhicule ou une augmentation de la dynamique du véhicule.

10. Direction assistée selon l'une des revendications 1 à 9, **caractérisée en ce qu'**au moyen de la fraction indépendante du conducteur, il se produit une adaptation du moment de direction supplémentaire à une trajectoire du véhicule et à un tracé de la chaussée.

11. Direction assistée selon l'une des revendications 1 à 10, **caractérisée en ce que** les variations du moment de direction supplémentaire s'effectuent par un facteur d'amplification V ou un facteur d'échelonnement λ selon la relation V = 1/λ.

12. Direction assistée selon la revendication 11, **caractérisée en ce que** le facteur d'échelonnement λ ou facteur d'amplification V (V = 1/λ) est limité en fonction du moment à une valeur prédéfinie.

13. Direction assistée selon l'une des revendications 1 à 12, **caractérisée en ce que** les moyens pour l'application active du moment de direction supplémentaire sont réalisés sous la forme d'une unité qui est disposée en tant que module sur un segment terminal côté volant de la soupape de direction d'une direction assistée hydraulique.

14. Procédé de régulation d'une direction assistée hydraulique dans lequel l'actionnement du volant par le conducteur d'un véhicule, en particulier d'un véhicule automobile, est soutenu par une force hydraulique ou pression hydraulique et dans lequel, par un moteur électrique accouplé à la colonne de direction, en tant qu'actionneur de moment supplémentaire, un moment de direction supplémentaire est appliqué activement par une commande électronique ou régulation du moteur électrique,
**caractérisé en ce qu'**à partir d'une fraction dépendant du conducteur et d'une fraction indépendante du conducteur, en ùp tenant compte du moment de direction supplémentaire ou d'une grandeur dérivée de celui-ci ainsi que d'une courbe caractéristique de base présélectionnée de la direction (courbe caractéristique de base), une valeur globale du moment de direction supplémentaire est déterminée.

15. Procédé selon la revendication 14, **caractérisé en ce qu'**une variation de l'application du moment de direction supplémentaire s'effectue par sélection d'une courbe caractéristique parmi plusieurs courbes caractéristiques différentes prédéfinies.
